# EUROPEAN PATENT APPLICATION

(11) **EP 4 756 843 A1**
(43) Date of publication of application: **10.06.2026**
(21) Application number: 24859924.3
(22) Date of filing: 29.08.2024
(51) Int. Cl.: H01B 1/10, H01M 4/62, H01M 10/0562, H01B 1/06

(54) **COMPOSITION, MIXTURE FOR ELECTROCHEMICAL DEVICE, MIXTURE SHEET FOR ELECTROCHEMICAL DEVICE, ELECTROCHEMICAL DEVICE, AND METHOD FOR MANUFACTURING MIXTURE SHEET FOR ELECTROCHEMICAL DEVICE**

(30) Priority: 31.08.2023 JP 2023141191
(71) Applicant: Daikin Industries, Ltd., Osaka-shi, Osaka 530-0001 (JP); TOYOTA JIDOSHA KABUSHIKI KAISHA, Toyota-Shi, Aichi-Ken 471-8571 (JP)
(72) Inventor: HIRAGA, Kentaro, Osaka-Shi, Osaka 530-0001 (JP); INOUE, Mayu, Osaka-Shi, Osaka 530-0001 (JP); YAMADA, Takaya, Osaka-Shi, Osaka 530-0001 (JP); KATO, Taketo, Osaka-Shi, Osaka 530-0001 (JP); NOMOTO, Kazushige, Toyota-shi, Aichi 471-8571 (JP); MIZUNO, Fuminori, Toyota-shi, Aichi 471-8571 (JP); NISHIMURA, Hideaki, Toyota-shi, Aichi 471-8571 (JP)
(74) Representative: Hoffmann Eitle
(86) International application number: PCT/JP2024/031037
(87) International publication number: WO 2025/047898

(57) **Abstract**

The disclosure aims to provide a composition capable of reducing the resistance of an electrochemical device containing a sulfide solid electrolyte, a mixture for an electrochemical device, a mixture sheet for an electrochemical device, an electrochemical device, and a method for producing a mixture sheet for an electrochemical device. Provided is a composition containing: a sulfide solid electrolyte; a fluoropolyether; and a fibrillatable resin.

## Description

### TECHNICAL FIELD

The disclosure relates to compositions, mixtures for electrochemical devices, mixture sheets for electrochemical devices, electrochemical devices, and methods for producing mixture sheets for electrochemical devices.

### BACKGROUND ART

Current electric appliances demonstrate a tendency to have a reduced weight and a smaller size, which leads to development of electrochemical devices such as lithium-ion secondary batteries having a high energy density.

As techniques relating to electrochemical devices, Patent Literature 1 discloses a solid electrolyte composition containing a specific (per)fluoropolyether, a specific poly(alkylene)oxide, and a lithium salt, and Patent Literature 2 discloses a solid electrolyte slurry containing an inorganic solid electrolyte material and a liquid such as perfluoropolyether or silicone oil and having a binder resin content adjusted to a specific range.

### CITATION LIST

### - Patent Literature

Patent Literature 1: JP 2022-506854 T
Patent Literature 2: JP 2016-062709 A

### SUMMARY OF INVENTION

### - Technical Problem

In the production of electrochemical devices such as secondary batteries, pressing electrodes and other components under high pressure is believed to reduce the resistance of the electrodes and other components. Particularly in the production of electrochemical devices containing sulfide solid electrolytes, the effect of reducing the resistance attributable to pressing under high pressure is considered to be significant. On the other hand, in order to simplify the production process and reduce the production cost of electrochemical devices, electrodes and other components are desired to be pressed under low pressure. However, if pressing under low pressure is employed in the production of electrochemical devices containing sulfide solid electrolytes, the above effect of reducing the resistance tends to be difficult to achieve. A new technique therefore needs to be developed to reduce the resistance of electrochemical devices containing sulfide solid electrolytes.

The disclosure aims to solve the above problem and provide a composition capable of reducing the resistance of an electrochemical device containing a sulfide solid electrolyte, a mixture for an electrochemical device, a mixture sheet for an electrochemical device, an electrochemical device, and a method for producing a mixture sheet for an electrochemical device.

### - Solution to Problem

The disclosure (1) relates to a composition containing: a sulfide solid electrolyte; a fluoropolyether; and a fibrillatable resin.

The disclosure (2) relates to the composition according to the disclosure (1), wherein the fluoropolyether includes at least one compound represented by any of the following formulas (1) to (4):

(1) R¹-O-Ra¹-Rb¹-O-Ra¹-R¹;

(2) R²-Rb²-O-Ra²-Rb²-R²;

(3) R³-Rb³-O-Ra³-R³;

and

(4) R⁴-Rb⁴-R⁴,

wherein Ra¹ to Ra³ are each independently a group containing at least one of a fluorine-free alkylene unit or a fluorine-free oxyalkylene unit;
each oxyalkylene unit in Ra¹ to Ra³ is independently -CH₂CH₂O- or - CH₂CH(J)O-;
each J is independently an alkyl group or an aryl group;
Rb¹ to Rb⁴ are each independently a fluoropolyether group represented by the following formula (5);
R¹ to R³ are each independently a hydrogen atom, a hydroxy group, a fluorine atom, a C1-C3 alkyl group, an aryl group, a carboxylic acid group, or a C1-C3 fluoroalkyl group; and
each R⁴ is independently a fluorine atom, a hydrogen atom, a hydroxy group, an aldehyde group, a carboxylic acid group, a C1-C10 alkyl ester group, an amide group optionally containing a substituent, or an amino group optionally containing a substituent,

   (5) -Rf¹-Rf-O-Rf²-

   -wherein Rf¹ and Rf² are each independently a C1-C16 alkylene group optionally substituted with a fluorine atom, and
Rf is a divalent fluoropolyether group.

The disclosure (3) relates to the composition according to the disclosure (2), wherein the Ra¹ to Ra³ are each independently a polyoxyalkylene group represented by the following formula (Ra-I),

(Ra-I): -(CH₂CH₂O)ᵣ-(CH₂CH(CH₃)O)ₛ-(CH₂CH(CH₂CH₃)O)ₜ-(CH₂CH(Ph)O)ᵤ-

-wherein r, s, t, and u are each independently an integer of 0 or 1 or greater, and r + s + t + u is 4 to 50.

The disclosure (4) relates to the composition according to the disclosure (2) or (3), wherein the Ra¹ to Ra³ each have a number average molecular weight of 40 to 4000.

The disclosure (5) relates to the composition according to any one of the disclosures (2) to (4), wherein each Rf is independently a fluoropolyether group represented by the following formula (Rf-I),

Formula (Rf-I): -(OC₆F₁₂)ₐ-(OC₅F₁₀)_{b}-(OC₄F₈)_{c}-(OC₃Rc₆)_{d}-(OC₂F₄)ₑ-(OCF₂)_{f}-

-wherein each Rc is independently a hydrogen atom, a fluorine atom, or a chlorine atom;
a, b, c, d, e, and f are each independently an integer of 0 to 200;
a sum of a, b, c, d, e, and f is 1 or greater;
repeating units with a, b, c, d, e, and f are present in an arbitrary order; and
at least one of a, b, c, e, and f is 1 or greater when all Rcs are hydrogen atoms or chlorine atoms.

The disclosure (6) relates to the composition according to any one of the disclosures (2) to (5), wherein each Rf is independently a group represented by the following formula (Rf-I-I) or the following formula (Rf-I-II),

Formula (Rf-I-I): -(OC₃F₆)_{d}-(OC₂F₄)ₑ-

-wherein d is an integer of 1 to 200 and e is 0 or 1, and

Formula (Rf-I-II): -(OC₄F₈)_{c}-(OC₃F₆)_{d}-(OC₂F₄)ₑ-(OCF₂)_{f}-

-wherein c and d are each independently an integer of 0 to 30;
e and f are each independently an integer of 1 to 200;
a sum of c, d, e, and f is 2 or greater; and
repeating units with c, d, e, and f are present in an arbitrary order.

The disclosure (7) relates to the composition according to any one of the disclosures (2) to (6), wherein the R¹ to R³ are each independently a methyl group, an ethyl group, a trifluoromethyl group, or a pentafluoroethyl group.

The disclosure (8) relates to the composition according to any one of the disclosures (1) to (7), wherein the fibrillatable resin includes polytetrafluoroethylene.

The disclosure (9) relates to the composition according to any one of the disclosures (1) to (8), wherein the fluoropolyether is liquid at a temperature within a range of 25°C to 80°C.

The disclosure (10) relates to the composition according to any one of the disclosures (1) to (9), wherein a polyalkylene oxide represented by the following formula (6) amounts to less than 20% by mass:

(6) R^{1B}-(OCHR^{1A}(CH₂)jCHR^{2A})n-OR^{2B}

wherein R^{1A} and R^{2A} are each independently a hydrogen atom or a C1-C5 alkyl group;
j is an integer of 0 or 1 or 2;
R^{1B} and R^{2B} are each independently a hydrogen atom or a C1-C3 alkyl group; and
n is an integer of 5 to 1000.

The disclosure (11) relates to the composition according to any one of the disclosures (1) to (10), wherein the composition contains a lithium salt in an amount of 0.1 to 30% by mass relative to the fluoropolyether.

The disclosure (12) relates to a mixture for an electrochemical device, containing the composition according to any one of the disclosures (1) to (11).

The disclosure (13) relates to the mixture for an electrochemical device according to the disclosure (12), further containing a conductive aid.

The disclosure (14) relates to a mixture sheet for an electrochemical device, containing the mixture for an electrochemical device according to the disclosure (12) or (13).

The disclosure (15) relates to an electrochemical device including the mixture sheet for an electrochemical device according to the disclosure (14).

The disclosure (16) relates to a method for producing a mixture sheet for an electrochemical device, the method including:
a step (1) of mixing a fluoropolyether, a fibrillatable resin, and a sulfide solid electrolyte to prepare a composition; and a step (2) of rolling the composition obtained in the step (1) into a sheet.

The disclosure (17) relates to the production method according to the disclosure (16), wherein the fluoropolyether includes at least one compound represented by any of the following formulas (1) to (4), and
the fibrillatable resin includes polytetrafluoroethylene,

   (1) R¹-O-Ra¹-Rb¹-O-Ra¹-R¹;

   (2) R²-Rb²-O-Ra²-Rb²-R²;

   (3) R³-Rb³-O-Ra³-R³;

   and

   (4) R⁴-Rb⁴-R⁴,

   wherein Ra¹ to Ra³ are each independently a group containing at least one of a fluorine-free alkylene unit or a fluorine-free oxyalkylene unit;
each oxyalkylene unit in Ra¹ to Ra³ is independently -CH₂CH₂O- or - CH₂CH(J)O-;
each J is independently an alkyl group or an aryl group;
Rb¹ to Rb⁴ are each independently a fluoropolyether group represented by the following formula (5);
R¹ to R³ are each independently a hydrogen atom, a hydroxy group, a fluorine atom, a C1-C3 alkyl group, an aryl group, a carboxylic acid group, or a C1-C3 fluoroalkyl group; and
each R⁴ is independently a fluorine atom, a hydrogen atom, a hydroxy group, an aldehyde group, a carboxylic acid group, a C1-C10 alkyl ester group, an amide group optionally containing a substituent, or an amino group optionally containing a substituent,

   (5) -Rf¹-Rf-O-Rf²-

   -wherein Rf¹ and Rf² are each independently a C1-C16 alkylene group optionally substituted with a fluorine atom, and
each Rf is independently a group represented by the following formula (Rf-I-I) or the following formula (Rf-I-II),

   Formula (Rf-I-I): -(OC₃F₆)_{d}-(OC₂F₄)ₑ-

   -wherein d is an integer of 1 to 200 and e is 0 or 1, or

   Formula (Rf-I-II): -(OC₄F₈)_{c}-(OC₃F₆)_{d}-(OC₂F₄)ₑ-(OCF₂)_{f}-

   -wherein c and d are each independently an integer of 0 to 30;
e and f are each independently an integer of 1 to 200;
a sum of c, d, e, and f is 2 or greater; and
repeating units with c, d, e, and f are present in an arbitrary order.

### - Advantageous Effects of Invention

The disclosure can provide a composition capable of reducing the resistance of an electrochemical device containing a sulfide solid electrolyte, a mixture for an electrochemical device, a mixture sheet for an electrochemical device, an electrochemical device, and a method for producing a mixture sheet for an electrochemical device.

### DESCRIPTION OF EMBODIMENTS

The disclosure will be specifically described hereinbelow.

### <Composition>

The disclosure relates to a composition containing a sulfide solid electrolyte, a fluoropolyether, and a fibrillatable resin.

The composition of the disclosure having the above formulation can reduce the resistance of an electrochemical device containing a sulfide solid electrolyte.

The sulfide solid electrolyte is not limited. The sulfide solid electrolyte used may be any one selected from Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (x = 0.6 to 0.8), Li_{4+y}Ge_{1-y}Ga_{y}S₄ (y = 0.2 to 0.3), LiPSCl, LiCl, Li_{7-x-2y}PS_{6-x-y}Clₓ (0.8 ≤ x ≤ 1.7, 0 < y ≤ -0.25x + 0.5), Li₁₀SnP₂S₁₂, and LiI-LiBr-Li₂S-P₂S₅, or a mixture of two or more thereof. Particularly preferred among these is LiI-LiBr-Li₂S-P₂S₅.

The sulfide solid electrolyte preferably contains lithium. Sulfide solid electrolytes containing lithium are used in solid-state batteries in which lithium ions are used as carriers, and are particularly preferred in that they provide electrochemical devices having high energy density.

The amount of the sulfide solid electrolyte in the composition of the disclosure is preferably 70% by mass or more, more preferably 80% by mass or more, still more preferably 90% by mass or more, while it is preferably 99.9% by mass or less.

The fluoropolyether suitably contains at least one compound represented by any of the following formulas (1) to (4). These compounds exhibit good lubricity owing to the Rb¹ to Rb⁴ moieties, thereby reducing the grain boundary resistance. The compounds of the formulas (1) to (3) have ion conductivity owing to the presence of Ra¹ to Ra³ moieties, and therefore can further reduce the grain boundary resistance.

(1) R¹-O-Ra¹-Rb¹-O-Ra¹-R¹

(2) R²-Rb²-O-Ra²-Rb²-R²

(3) R³-Rb³-O-Ra³-R³

(4) R⁴-Rb⁴-R⁴

In the formulas, Ra¹ to Ra³ are each independently a group containing at least one of a fluorine-free alkylene unit or a fluorine-free oxyalkylene unit;
each oxyalkylene unit in Ra¹ to Ra³ is independently -CH₂CH₂O- or - CH₂CH(J)O-;
each J is independently an alkyl group or an aryl group;
Rb¹ to Rb⁴ are each independently a fluoropolyether group represented by the following formula (5);
R¹ to R³ are each independently a hydrogen atom, a hydroxy group, a fluorine atom, a C1-C3 alkyl group, an aryl group, a carboxylic acid group, or a C1-C3 fluoroalkyl group; and
each R⁴ is independently a fluorine atom, a hydrogen atom, a hydroxy group, an aldehyde group, a carboxylic acid group, a C1-C10 alkyl ester group, an amide group optionally containing a substituent, or an amino group optionally containing a substituent, (5) -Rf¹-Rf-O-Rf²- wherein Rf¹ and Rf² are each independently a C1-C16 alkylene group optionally substituted with a fluorine atom, and
Rf is a divalent fluoropolyether group.

The alkylene units in Ra¹ to Ra³ may be linear or branched, and are preferably linear. They each preferably have a carbon number of 1 to 3.

When the oxyalkylene units in Ra¹ to Ra³ are each -CH₂CH(J)O-, J as an alkyl group may be linear or branched, and is preferably linear. The alkyl group for J preferably contains 1 to 3 carbon atoms.

Examples of aryl groups for J include a phenyl group, a 4-nitrophenyl group, a 4-acetylaminophenyl group, and a 4-methanesulfonylphenyl group.

In Ra¹ to Ra³, the total number of fluorine-free alkylene units and fluorine-free oxyalkylene units is preferably 4 to 50.

Ra¹ to Ra³ preferably each independently include at least an oxyalkylene unit, more preferably each independently include a polyoxyalkylene unit represented by the following formula (Ra-I),

(Ra-I): -(CH₂CH₂O)ᵣ-(CH₂CH(CH₃)O)ₛ-(CH₂CH(CH₂CH₃)O)ₜ-(CH₂CH(Ph)O)ᵤ-

wherein r, s, t, and u are each independently an integer of 0 or 1 or greater, and r + s + t + u is 4 to 50.

In the formula (Ra-I), r is preferably 1 or greater, more preferably 2 or greater, while preferably 30 or smaller, more preferably 20 or smaller.

s, t, and u are each preferably 10 or smaller, more preferably 5 or smaller, still more preferably 0.

r + s + t + u is preferably 1 or greater, more preferably 2 or greater, while preferably 20 or smaller, more preferably 10 or smaller.

Ra¹ to Ra³ each have a number average molecular weight of preferably 40 or greater, more preferably 100 or greater, while preferably 4000 or smaller, more preferably 1000 or smaller.

The number average molecular weights of Ra¹ to Ra³ herein are measured by ¹H-NMR.

In Rb¹ to Rb⁴, the alkylene groups for Rf¹ and Rf² in the formula (5) may be linear or branched, and are preferably linear.

The alkylene groups for Rf¹ and Rf² are each preferably a fluorine-substituted alkylene group substituted with a fluorine atom.

The alkylene groups for Rf¹ and Rf² each preferably have a carbon number of 1 to 3.

In Rb¹ to Rb⁴, Rf in the formula (5) may have a cyclic structure.

In Rb¹ to Rb⁴, Rf in the formula (5) is preferably a fluoropolyether group represented by the following formula (Rf-I),

Formula (Rf-I): -(OC₆F₁₂)ₐ-(OC₅F₁₀)_{b}-(OC₄F₈)_{c}-(OC₃Rc₆)_{d}-(OC₂F₄)ₑ-(OCF₂)_{f}-

-wherein each Rc is independently a hydrogen atom, a fluorine atom, or a chlorine atom;
a, b, c, d, e, and f are each independently an integer of 0 to 200;
a sum of a, b, c, d, e, and f is 1 or greater;
repeating units with a, b, c, d, e, and f are present in an arbitrary order; and
at least one of a, b, c, e, and f is 1 or greater when all Rcs are hydrogen atoms or chlorine atoms.

Rc is preferably a hydrogen atom or a fluorine atom, more preferably a fluorine atom. In other words, Rf in the formula (5) is preferably a perfluoropolyether group.

a, b, c, d, e, and f are preferably each independently an integer of 0 to 100.

The sum of a, b, c, d, e, and f is preferably 5 or greater, more preferably 10 or greater, and may be 15 or greater or 20 or greater. The sum of a, b, c, d, e, and f is preferably 100 or smaller, more preferably 60 or smaller, and may be 50 or smaller or 30 or smaller.

The repeating units with a, b, c, d, e, and f each may be linear or branched.
-(OC₆F₁₂)- may be, for example, any of -(OCF₂CF₂CF₂CF₂CF₂CF₂)-, - (OCF(CF₃)CF₂CF₂CF₂CF₂)-, -(OCF₂CF(CF₃)CF₂CF₂CF₂)-, - (OCF₂CF₂CF(CF₃)CF₂CF₂)-, -(OCF₂CF₂CF₂CF(CF₃)CF₂)-, and - (OCF₂CF₂CF₂CF₂CF(CF₃))-.
-(OC₅F₁₀)- may be, for example, any of -(OCF₂CF₂CF₂CF₂CF₂)-, - (OCF(CF₃)CF₂CF₂CF₂)-, -(OCF₂CF(CF₃)CF₂CF₂)-, -(OCF₂CF₂CF(CF₃)CF₂)-, and - (OCF₂CF₂CF₂CF(CF₃)).
-(OC₄F₈)- may be, for example, any of -(OCF₂CF₂CF₂CF₂)-, - (OCF(CF₃)CF₂CF₂)-, -(OCF₂CF(CF₃)CF₂)-, -(OCF₂CF₂CF(CF₃))-, -(OC(CF₃)₂CF₂)-, - (OCF₂C(CF₃)₂)-, -(OCF(CF₃)CF(CF₃))-, -(OCF(C₂F₅)CF₂)-, and -(OCF₂CF(C₂F₅)).
-(OC₃F₆)- (specifically, the case where all Rcs in the formula (Rf-I) are fluorine atoms) may be, for example, any of -(OCF₂CF₂CF₂)-, -(OCF(CF₃)CF₂)-, and - (OCF₂CF(CF₃))-.
-(OC₂F₄)- may be, for example, either -(OCF₂CF₂)- or -(OCF(CF₃))-.

Rf may be a group represented by any of the following formulas (Rf-I-I) to (Rf-I-V),

Formula (Rf-I-I): -(OC₃F₆)_{d}-(OC₂F₄)ₑ-

-wherein d is an integer of 1 to 200 and e is 0 or 1,

Formula (Rf-I-II): -(OC₄F₈)_{c}-(OC₃F₆)_{d}-(OC₂F₄)ₑ-(OCF₂)_{f}-

-wherein c and d are each independently an integer of 0 to 30;
e and f are each independently an integer of 1 to 200;
a sum of c, d, e, and f is 2 or greater; and
repeating units with c, d, e, and f are present in an arbitrary order,

   Formula (Rf-I-III), -(R²⁰-R²¹)_{g}-

   -wherein R²⁰ is OCF₂ or OC₂F₄,
R²¹ is a group selected from OC₂F₄, OC₃F₆, OC₄F₈, OC₅F₁₀, and OC₆F₁₂ or a combination of two or three groups selected from the aforementioned groups, and
g is an integer of 2 to 100;

   Formula (Rf-I-IV): -(OC₆F₁₂)ₐ-(OC₅F₁₀)_{b}-(OC₄F₈)_{c}-(OC₃F₆)_{d}-(OC₂F₄)ₑ-(OCF₂)_{f}-

   -wherein e is an integer of 1 to 200,
a, b, c, d, and f are each independently an integer of 0 to 200, and
repeating units with a, b, c, d, e, and f are present in an arbitrary order; and

   Formula (Rf-I-V): -(OC₆F₁₂)ₐ-(OC₅F₁₀)_{b}-(OC₄F₈)_{c}-(OC₃F₆)_{d}-(OC₂F₄)ₑ-(OCF₂)_{f}-

   -wherein f is an integer of 1 to 200,
a, b, c, d, and e are each independently an integer of 0 to 200, and
repeating units with a, b, c, d, e, and f are present in an arbitrary order.

In the formula (Rf-I-I), d may be preferably 5 to 200, more preferably 10 to 100, still more preferably 10 to 30.

The group represented by the formula (Rf-I-I) is preferably a group represented by -(OCF₂CF₂CF₂)_{d}- or -(OCF(CF₃)CF₂)_{d}-.

In the formula (Rf-I-II), e and f are each independently an integer of preferably 5 to 200, more preferably 10 to 200. The sum of c, d, e, and f is preferably 5 or greater, more preferably 10 or greater, and may be 15 or greater or 20 or greater.

The group represented by the formula (Rf-I-II) is preferably a group represented by -(OCF₂CF₂CF₂CF₂)_{c}-(OCF₂CF₂CF₂)_{d}-(OCF₂CF₂)ₑ-(OCF₂)_{f}- or a group represented by -(OC₂F₄)ₑ-(OCF₂)_{f}-, more preferably a group represented by -(OC₂F₄)ₑ-(OCF₂)_{f}-.

In the formula (Rf-I-III), R²⁰ is preferably OC₂F₄, R²¹ is preferably a group selected from OC₂F₄, OC₃F₆, and OC₄F₈ or a combination of two or three groups independently selected from the aforementioned groups, more preferably a group selected from OC₃F₆ and OC₄F₈. Non-limiting examples of the combination of two or three groups independently selected from OC₂F₄, OC₃F₆, and OC₄F₈ include - OC₂F₄OC₃F₆-, -OC₂F₄OC₄F₈-, -OC₃F₆OC₂F₄-, -OC₃F₆OC₃F₆-, -OC₃F₆OC₄F₈-, - OC₄F8OC₄F₈-, -OC₄F₈OC₃F₆-, -OC₄F₈OC₂F₄-, -OC₂F₄OC₂F₄OC₃F₆-, - OC₂F₄OC₂F₄OC₄F₈-, -OC₂F₄OC₃F₆OC₂F₄-, -OC₂F₄OC₃F₆OC₃F₆-, -OC₂F₄OC₄F₈OC₂F₄-, -OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-.

In the formula (Rf-I-III), g is an integer of preferably 3 or greater, more preferably 5 or greater. g is preferably an integer of 50 or smaller.

In the formula (Rf-I-III), OC₂F₄, OC₃F₆, OC₄F₈, OC₅F₁₀, and OC₆F₁₂ may be linear or branched, and are preferably linear. In this embodiment, the formula (Rf-I-III) preferably represents -(OC₂F₄-OC₃F₆)_{g}- or -(OC₂F₄-OC₄F₈)_{g}-.

In the formula (Rf-I-IV), e is an integer of preferably 1 to 100, more preferably 5 to 100. The sum of a, b, c, d, e, and f is preferably 5 or greater, more preferably 10 or greater, and is, for example, 10 to 100.

In the formula (Rf-I-V), f is an integer of preferably 1 to 100, more preferably 5 to 100. The sum of a, b, c, d, e, and f is preferably 5 or greater, more preferably 10 or greater, and is, for example, 10 to 100.

The ratio of e to f (hereafter, referred to as "e/f ratio") in Rf may be 0.5 to 4, and is preferably 0.6 to 3, more preferably 0.7 to 2, still more preferably 0.8 to 1.4. Setting the e/f ratio to 4 or smaller further improves the lubricity and chemical stability. The smaller the e/f ratio, the higher the lubricity. Setting the e/f ratio to 0.5 or greater can further enhance the stability of the compound. The greater the e/f ratio, the better the stability of the fluoropolyether structure. In this case, the value of the e/f ratio is preferably 0.8 or greater.

Rf may be a group represented by the following formula (Rf-I-VI):

-(OCF₂CF₂CF₂)ₐ-(OCF(CF₃)CF₂)_{b}-(OCF₂CF(CF₃))_{c}-(OCF₂CF₂)_{d}-(OCF(CF₃))ₑ-(OCF₂)_{f}-

wherein a, b, c, d, e, and f are each independently an integer of 0 to 200,
the sum of a, b, c, d, e, and f is 1 or greater, and
repeating units with a, b, c, d, e, and f are present in an arbitrary order.

Rf may be a group represented by the following formula (Rf-I-VII):

-(OCF₂CF₂)_{d}-(OCF(CF₃))ₑ-(OCF₂)_{f}-

wherein d, e, and f are each independently an integer of 0 to 200,
the sum of d, e, and f is 1 or greater, and
repeating units with d, e, and f are present in an arbitrary order.

In the case where Rf is this group, the salt solubility is expected to be better because an increase in the number of ether bonds facilitates coordination of salt cations.

The ratio of d to f (hereafter, referred to as "d/f ratio") in Rf may be 0.5 to 4, and is preferably 0.6 to 3, more preferably 0.7 to 2, still more preferably 0.8 to 1.4. Setting the d/f ratio to 4 or smaller further improves the lubricity and chemical stability. The smaller the d/f ratio, the higher the lubricity. Setting the d/f ratio to 0.5 or greater can further enhance the stability of the compound. The greater the d/f ratio, the better the stability of the fluoropolyether structure. In this case, the value of the d/f ratio is preferably 0.8 or greater.

Each Rf is independently preferably a group represented by the formula (Rf-I-I) or the formula (Rf-I-II), more preferably a group represented by the formula (Rf-I-II).

Rf may have a number average molecular weight of, but not limited to, for example, 500 to 30000, preferably 1500 to 30000, more preferably 2000 to 10000.

The number average molecular weight of Rf herein is measured by ¹⁹F-NMR.

The alkyl or fluoroalkyl group for R¹ to R³ may be linear or branched, and is preferably linear.

Examples of aryl groups for R¹ to R³ include a phenyl group, a 4-nitrophenyl group, a 4-acetylaminophenyl group, and a 4-methanesulfonylphenyl group.

R¹ to R³ are each independently preferably a C1-C3 alkyl group or a C1-C3 fluoroalkyl group, more preferably a methyl group, an ethyl group, a trifluoromethyl group, or a pentafluoroethyl group, still more preferably a methyl group, a trilfluoromethyl group, or a pentafluoroethyl group.

The alkyl ester group for R⁴ may be linear or branched.

Examples of the substituent contained in the amide or amino group for R⁴ include an alkyl group, an alkoxy group, and a hydroxy group.

Each R⁴ is independently preferably a fluorine atom, a hydrogen atom, a hydroxy group, an aldehyde group, a carboxylic acid group, a C1-C10 alkyl ester group, an amide group optionally containing a substituent, or an amino group optionally containing a substituent, more preferably a fluorine atom.

When R⁴ is a fluorine atom, R⁴-Rb⁴ and Rb⁴-R⁴, that is, R⁴-Rf¹ and Rf²-R⁴ may be each independently a group selected from the group consisting of -CF₃, -CF₂CF₃, and -CF₂CF₂CF₃.

In order to achieve, for example, good ion conductivity, the fluoropolyether preferably includes at least one selected from the group consisting of compounds represented by the formula (1) to the formula (4), particularly preferably a compound represented by the formula (1).

In order to achieve, for example, good ion conductivity, the fluoropolyether is preferably liquid at a temperature within a range of 25°C to 80°C, more preferably liquid at 25°C.

Examples of the form "liquid at a temperature within a range of 25°C to 80°C" include a form "solid at 25°C and liquid at 50°C" and a form "solid at 50°C and liquid at 80°C". The form "liquid at a low temperature and solid at a high temperature" is not included in the form "liquid at a temperature within a range of 25°C to 80°C" because such a form does not normally exist.

The amount of the fluoropolyether relative to solid materials in the composition of the disclosure is preferably 0.1% by mass or more, more preferably 0.5% by mass or more, still more preferably 1% by mass or more, while it is preferably 25% by mass or less, more preferably 15% by mass or less, still more preferably 10% by mass or less.

The solid materials refer to materials to which lubricity is imparted by the fluoropolyether, and are solid after being mixed with the fluoropolyether. Components (e.g., lithium salt) to be dissolved in the fluoropolyether after mixing are not included in the solid materials. In EXAMPLES described later, a positive electrode active material, a solid electrolyte, a conductive aid, and a binder (fibrillatable resin) are included in the solid materials.

The fibrillatable resin is a resin that is easily fibrillated under a shear stress. Examples of the fibrillatable resin include liquid crystal polymers (LCP), cellulose, acrylic resins, ultra high molecular weight polyethylene, and polytetrafluoroethylene (PTFE). Each of these may be used alone or two or more of these may be used in combination. PTFE is preferred among these in terms of chemical stability, thermal stability, and processibility.

The PTFE may be either a homopolymer of tetrafluoroethylene (TFE) or a modified PTFE containing a polymerized unit based on TFE (TFE unit) and a polymerized unit based on a modifying monomer (hereinafter, also referred to as a "modifying monomer unit"). The modified PTFE may contain 99.0% by mass or more of the TFE unit and 1.0% by mass or less of the modifying monomer unit. The modified PTFE may consist of the TFE unit and the modifying monomer unit.

In order to achieve improvement in binding force, sheet strength, and flexibility, the PTFE is preferably the modified PTFE.

In order to achieve improvement in binding force, sheet strength, and flexibility, the modified PTFE preferably contains a modifying monomer unit in an amount falling within a range of 0.00001 to 1.0% by mass in all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.80% by mass, more preferably 0.50% by mass, still more preferably 0.40% by mass, further preferably 0.30% by mass.

The modifying monomer unit herein means a moiety that is part of the molecular structure of PTFE and is derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include a perfluoroolefin such as hexafluoropropylene (HFP); a hydrogen-containing fluoroolefin such as trifluoroethylene or vinylidene fluoride (VDF); a perhaloolefin such as chlorotrifluoroethylene (CTFE); a perfluorovinyl ether; a perfluoroallyl ether; a (perfluoroalkyl)ethylene; and ethylene. One modifying monomer may be used alone or two or more modifying monomers may be used in combination.

Examples of the perfluorovinyl ether include, but are not limited to, an unsaturated perfluoro compound represented by the following formula (A):

CF₂=CF-ORff (A)

wherein Rff is a perfluoroorganic group. The term "perfluoro organic group" herein means an organic group in which all hydrogen atoms bonded to any carbon atom are replaced by fluorine atoms. The perfluoro organic group may have an ether oxygen.

Examples of the perfluorovinyl ether include a perfluoro(alkyl vinyl ether) (PAVE) represented by the formula (A) in which Rff is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include: those represented by the formula (A) wherein Rff is a C4-C9 perfluoro(alkoxy alkyl) group; those represented by the formula (A) wherein Rff is a group represented by the following formula: 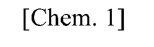 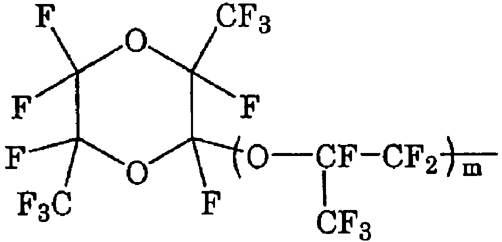
wherein m is an integer of 0 or 1 to 4; and those represented by the formula (A) wherein Rff is a group represented by the following formula: 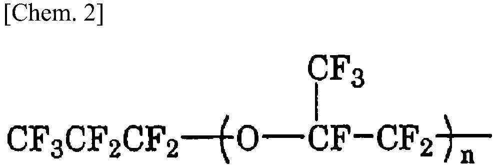
wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORff¹ (B)

wherein Rff¹ is a perfluoro organic group.

Rff¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, still more preferably CF₂=CF-CF₂-O-CF₂CF₂CF₃.

In order to achieve improvement in expandability, binding force, and flexibility of the mixture sheet, the modifying monomer preferably includes at least one selected from the group consisting of PAVE, HFP, VDF, and CTFE, more preferably includes at least one selected from the group consisting of perfluoro(methyl vinyl ether) (PMVE), HFP, VDF, and CTFE.

The PTFE may have a core-shell structure. An example of the PTFE having a core-shell structure is a modified PTFE including a core of high-molecular-weight PTFE and a shell of lower-molecular-weight PTFE or modified PTFE in a particle. Examples of this modified PTFE include PTFEs disclosed in JP 2005-527652 T.

Examples of commercially available PTFEs include F-104, F-106, F-107, F-104C, F-121, F-201, F-205, F-208, and F-302 available from Daikin Industries, Ltd.; 60X, 601X, 602X, 605XTX, 613AX, 62X, 62NX, 62XTX, 640XTX, 641XTX, 650XTX, 669X, 669NX, 6CX, 6CNX, CFP6000X, 6J, 6CJ, 62J, 640J, and 641J available from The Chemours Company; TF2029, TF2025Z, TF2053Z, TF2073Z, TF2001Z, TF2071USZ, and TF2072Z available from 3M; CD145, CD123, CD126E, CD097, CD084E, CD086EL, CD086EH, CD090E, CD122E, CD141E, and CD127E available from AGC Inc.; and DF681F, DF680F, DF330F, DF291F, DF230F, DF210F, DF132F, DF130F, and DF120F available from Solvay.

For formation of a mixture sheet with better strength, the PTFE preferably has an endothermic peak temperature of 320°C or higher, more preferably 325°C or higher, still more preferably 330°C or higher, further preferably 335°C or higher, further preferably 340°C or higher, further preferably 342°C or higher, particularly preferably 344°C or higher. The endothermic peak temperature is preferably 350°C or lower.

The endothermic peak temperature is the temperature corresponding to the minimum point on a heat-of-fusion curve obtained by performing differential scanning calorimetry (DSC) at a temperature-increasing rate of 10°C/min on PTFE that has never been heated to a temperature of 300°C or higher. When two or more minimum points are present in one melting peak, the temperatures corresponding to the respective peaks are considered as endothermic peak temperatures.

Preferably, the PTFE has at least one endothermic peak in a range of 333°C to 347°C on a heat-of-fusion curve obtained by increasing the temperature at a rate of 10°C/min using a differential scanning calorimeter (DSC), and has an enthalpy of fusion of 62 mJ/mg or higher at 290°C to 350°C calculated from the heat-of-fusion curve.

The amount of the fibrillatable resin relative to the solid materials other than the fibrillatable resin and the later-described different binder in the composition of the disclosure is preferably 0.1% by mass or more, more preferably 0.3% by mass or more, still more preferably 0.5% by mass or more, further preferably 1.0% by mass or more, while it is preferably 50% by mass or less, more preferably 40% by mass or less, still more preferably 30% by mass or less, further preferably 10% by mass or less.

The amount of a polyalkylene oxide represented by the following formula (6) in the composition of the disclosure is preferably less than 20% by mass. This ensures good ion conductivity. When the amount is 20% by mass or more, the composition tends to exhibit higher viscosity to have a decrease in ion conductivity, and at the same time have a decrease in electrochemical stability.

(6) R^{1B}-(OCHR^{1A}(CH₂)jCHR^{2A})n-OR^{2B}

In the formula, R^{1A} and R^{2A} are each independently a hydrogen atom or a C1-C5 alkyl group;
j is an integer of 0 or 1 or 2,
R^{1B} and R^{2B} are each independently a hydrogen atom or a C1-C3 alkyl group; and
n is an integer of 5 to 1000.

The amount of the polyalkylene oxide represented by the formula (6) in the composition of the disclosure is more preferably 10% by mass or less, still more preferably 5% by mass or less, particularly preferably 1% by mass or less. The lower limit is not limited and may be 0% by mass.

The composition of the disclosure may contain a lithium salt. The composition containing a lithium salt has good lithium-ion conductivity.

Any lithium salt may be used. Specific examples thereof include the following: inorganic lithium salts such as LiPF₆, LiBF₄, LiClO₄, LiAlF₄, LiSbF₆, LiTaF₆, LiWF₇, LiAsF₆, LiAlCl₄, LiI, LiBr, LiCl, LiB₁₀Cl₁₀, Li₂SiF₆, Li₂PFO₃, and LiPO₂F₂;
lithium tungstate salts such as LiWOF₅;
lithium carboxylate salts such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li;
lithium salts containing an S=O group such as FSO₃Li, CH₃SO₃Li, CH₂FSO₃Li, CHF₂SO₃Li, CF₃SO₃Li, CF₃CF₂SO₃Li, CF₃CF₂CF₂SO₃Li, CF₃CF₂CF₂CF₂SO₃Li, lithium methylsulfate, lithium ethylsulfate (C₂H₅OSO₃Li), and lithium 2,2,2-trifluoroethylsulfate;
lithium imide salts such as lithium bis(trifluoromethanesulfonimide) (LiTFSI), lithium bis(monofluorosulfonimide) (LiFSI), LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, lithium bis-perfluoroethanesulfonyl imide, lithium cyclic 1,2-perfluoroethanedisulfonyl imide, lithium cyclic 1,3-perfluoropropanedisulfonyl imide, lithium cyclic 1,2-ethanedisulfonyl imide, lithium cyclic 1,3-propanedisulfonyl imide, lithium cyclic 1,4-perfluorobutanedisulfonyl imide, LiN(CF₃SO₂)(FSO₂), LiN(CF₃SO₂)(C₃F₇SO₂), LiN(CF₃SO₂)(C₄F₉SO₂), and LiN(POF₂)₂;
lithium methide salts such as LiC(FSO₂)₃, LiC(CF₃SO₂)₃, and LiC(C₂F₅SO₂)₃; and
fluorine-containing organic lithium salts such as salts represented by the formula: LiPFₐ(CₙF₂ₙ₊₁)₆₋ₐ (wherein a is an integer of 0 to 5; and n is an integer of 1 to 6) such as LiPF₃(C₂F₅)₃, LiPF₃(CF₃)₃, LiPF₃(iso-C₃F₇)₃, LiPF₅(iso-C₃F₇), LiPF₄(CF₃)₂, and LiPF₄(C₂F₅)₂, as well as LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂, and LiSCN, LiB(CN)₄, LiB(C₆H₅)₄, Li₂(C₂O₄), LiP(C₂O₄)₃, and Li₂B₁₂F_{b}H_{12-b} (wherein b is an integer of 0 to 3).

Preferred among these are LiTFSI, LiFSI, LiPF₆, LiBF₄, LiSbF₆, LiTaF₆, LiPO₂F₂, FSO₃Li, CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonyl imide, lithium cyclic 1,3-perfluoropropanedisulfonyl imide, LiC(FSO₂)₃, LiC(CF₃SO₂)₃, LiC(C₂F₅SO₂)₃, LiBF₃CF₃, LiBF₃C₂F₅, LiPF₃(CF₃)₃, and LiPF₃(C₂F₅)₃. Particularly preferred are LiTFSI, LiFSI, and LiPF₆.

One of these lithium salts may be used alone or two or more thereof may be used in any combination. In combination use of two or more thereof, preferred examples thereof include a combination of LiPF₆ and LiBF₄ and a combination of LiPF₆ and LiPO₂F₂, C₂H₅OSO₃Li, or FSO₃Li, each of which has an effect of improving the high-temperature storage characteristics, the load characteristics, and the cycle characteristics.

In another example, an inorganic lithium salt and an organic lithium salt are used in combination. Such a combination has an effect of reducing deterioration due to high-temperature storage. The organic lithium salt is preferably CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonyl imide, lithium cyclic 1,3-perfluoropropanedisulfonyl imide, LiC(FSO₂)₃, LiC(CF₃SO₂)₃, LiC(C₂F₅SO₂)₃, LiBF₃CF₃, LiBF₃C₂F₅, LiPF₃(CF₃)₃, LiPF₃(C₂F₅)₃, or the like.

The amount of the lithium salt relative to the fluoropolyether in the composition of the disclosure is preferably 0.1% by mass or more, more preferably 1% by mass or more, while it is preferably 30% by mass or less, more preferably 20% by mass or less.

### <Electrochemical device mixture>

The composition of the disclosure capable of reducing the resistance of an electrochemical device can suitably be used as a mixture for an electrochemical device.

The disclosure also relates to a mixture for an electrochemical device of the disclosure.

The amount of the composition of the disclosure in the mixture for an electrochemical device of the disclosure is preferably 70% by mass or more, more preferably 80% by mass or more, still more preferably 90% by mass or more, while it is preferably 99.9% by mass or less, more preferably 99.5% by mass or less, still more preferably 99% by mass or less.

The electrochemical device mixture of the disclosure may contain a conductive aid.

Non-limiting examples of the conductive aid include metal materials such as copper, nickel, and gold and carbon materials such as graphite, including natural graphite and artificial graphite, carbon black, including acetylene black, Ketjen black, channel black, furnace black, lamp black, and thermal black, and amorphous carbon, including needle coke, carbon nanotube, fullerene, and vapor grown carbon fiber (VGCF). Preferred among these are carbon materials, more preferred is amorphous carbon, and still more preferred is VGCF. One of these may be used alone or two or more thereof may be used in any combination at any ratio.

The amount of the conductive aid in the mixture for an electrochemical device of the disclosure is preferably 20% by mass or less, more preferably 15% by mass or less, still more preferably 10% by mass or less. The lower limit is not limited and may be 0% by mass.

The fibrillatable resin serves as a binder in the electrochemical device mixture of the disclosure. Still, the electrochemical device mixture of the disclosure may contain a different binder.

Non-limiting examples of the different binder include resin polymers such as polyethylene, polypropylene, polyethylene terephthalate, polymethyl methacrylate, aromatic polyamides, chitosan, alginic acid, polyacrylic acid, polyimide, cellulose, and nitro cellulose; rubbery polymers such as styrene-butadiene rubber (SBR), isoprene rubber, butadiene rubber, fluoroelastomers, acrylonitrile-butadiene rubber (NBR), and ethylene-propylene rubber; styrene-butadiene-styrene block copolymers and hydrogenated products thereof; thermoplastic elastomeric polymers such as ethylene-propylene-diene terpolymers (EPDM), styrene-ethylene-butadiene-styrene copolymers, and styrene-isoprene-styrene block copolymers and hydrogenated products thereof; soft resin polymers such as syndiotactic-1,2-polybutadiene, polyvinyl acetate, ethylene-vinyl acetate copolymers, and propylene-α-olefin copolymers; fluoropolymers such as polyvinylidene fluoride, vinylidene fluoride copolymers, and tetrafluoroethylene-ethylene copolymers; and polymer compositions having ion conductivity of alkali metal ions (especially, lithium ions). One of these may be used alone or two or more thereof may be used in any combination at any ratio.

The amount of the different binder in the mixture for an electrochemical device of the disclosure is normally 0 to 10% by mass relative to the solid materials other than the fibrillatable resin and the different binder.

The mixture for an electrochemical device of the disclosure can be used as a solid electrolyte mixture.

Further addition of an electrode active material allows the mixture to be used as an electrode mixture.

The electrode active material may be a positive electrode active material or a negative electrode active material.

The positive electrode active material may be any material that can electrochemically occlude and release alkali metal ions, and is preferably, for example, a substance containing an alkali metal and at least one transition metal. Specific examples include alkali metal-containing transition metal composite oxides and alkali metal-containing transition metal phosphate compounds. Particularly preferred among these as the positive electrode active material are alkali metal-containing transition metal composite oxides, which produce high voltage. Examples of the alkali metal ions include lithium ions, sodium ions, and potassium ions. Preferred are lithium ions.

Examples of the alkali metal-containing transition metal complex oxide include
lithium-manganese spinel complex oxides represented by the formula: MₐMn_{2-b}M¹_{b}O₄
   (wherein M is at least one metal selected from the group consisting of Li, Na, and K; 0.9 ≤ a; 0 ≤ b ≤ 1.5; and M¹ is at least one metal selected from the group consisting of Fe, Co, Ni, Cu, Zn, Al, Sn, Cr, V, Ti, Mg, Ca, Sr, B, Ga, In, Si, and Ge),
lithium-nickel complex oxides represented by the formula: MNi_{1-c}M²_{c}O₂ (wherein M is at least one metal selected from the group consisting of Li, Na, and K; 0 ≤ c ≤ 0.5; and M² is at least one metal selected from the group consisting of Fe, Co, Mn, Cu, Zn, Al, Sn, Cr, V, Ti, Mg, Ca, Sr, B, Ga, In, Si, and Ge), and
lithium-cobalt complex oxides represented by the formula: MCo_{1-d}M³_{d}O₂ (wherein M is at least one metal selected from the group consisting of Li, Na, and K; 0 ≤ d ≤ 0.5; and M³ is at least one metal selected from the group consisting of Fe, Ni, Mn, Cu, Zn, Al, Sn, Cr, V, Ti, Mg, Ca, Sr, B, Ga, In, Si, and Ge). In the above formulas, M is preferably a metal selected from the group consisting of Li, Na, and K, more preferably Li or Na, still more preferably Li.

In order to achieve high-energy-density, high-output secondary batteries, preferred among these are MCoO₂, MMnO₂, MNiO₂, MMn₂O₄, MNi₀.₈Co_{0.15}Al_{0.05}O₂, and MNi_{1/3}Co_{1/3}Mn_{1/3}O₂, and preferred is a compound represented by the following formula:

MNiₕCoᵢMnⱼM⁵ₖO₂

wherein M is at least one metal selected from the group consisting of Li, Na, and K; M⁵ is at least one selected from the group consisting of Fe, Cu, Zn, Al, Sn, Cr, V, Ti, Mg, Ca, Sr, B, Ga, In, Si, and Ge; and (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include a compound represented by the following formula:

MₑM⁴_{f}(PO₄)_{g}

wherein M is at least one metal selected from the group consisting of Li, Na, and K; M⁴ is at least one selected from the group consisting of V, Ti, Cr, Mn, Fe, Co, Ni, and Cu; and 0.5 ≤ e ≤ 3, 1 ≤ f ≤ 2, and 1 ≤ g ≤ 3. In the above formulas, M is preferably a metal selected from the group consisting of Li, Na, and K, more preferably Li or Na, still more preferably Li.

The transition metal of the alkali metal-containing transition metal phosphate compound is preferably V, Ti, Cr, Mn, Fe, Co, Ni, Cu, or the like. Specific examples thereof include iron phosphates such as LiFePO₄, Li₃Fe₂(PO₄)₃, and LiFeP₂O₇, cobalt phosphates such as LiCoPO₄, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

Examples of a different positive electrode active material include a lithium-nickel composite oxide. The lithium-nickel composite oxide is preferably a positive electrode active material represented by the following formula:

Li_{y}Ni₁₋ₓMₓO₂

wherein 0.01 ≤ x ≤ 0.7, 0.9 ≤ y ≤ 2.0, and M is a metal atom (other than Li and Ni).

Other examples of the different positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. In particular, a positive electrode active material such as M₂MnO₃ or MNi_{0.5}Mn_{1.5}O₂ is preferred because the crystal structure thereof does not collapse even when the secondary battery is operated at a voltage exceeding 4.4 V or at a voltage of 4.6 V or higher. Thus, an electrochemical device such as a secondary battery including a positive electrode material containing any of the above-exemplified positive electrode active materials is preferred because the remaining capacity thereof is less likely to decrease and the percentage increase in resistance thereof is less likely to change even after storage at high temperature and the battery performance thereof may not be impaired even when the battery is operated at high voltage.

Other examples of the different positive electrode active material also include solid solution materials of M₂MnO₃ and MM⁶O₂ (wherein M is at least one metal selected from the group consisting of Li, Na, and K; and M⁶ is a transition metal such as Co, Ni, Mn, or Fe).

The solid solution material is, for example, an alkali metal manganese oxide represented by the formula Mₓ[Mn_{(1-y)}M⁷_{y}]O_{z}. In the formula, M is at least one metal selected from the group consisting of Li, Na, and K; and M⁷ is at least one metal element other than M or Mn, containing, for example, one or more elements selected from the group consisting of Co, Ni, Fe, Ti, Mo, W, Cr, Zr, and Sn. The values of x, y, and z in the formula are within the ranges of 1 < x < 2, 0 ≤ y < 1, and 1.5 < z < 3, respectively. In particular, a manganese-containing solid solution material such as Li_{1.2}Mn_{0.5}Co_{0.14}Ni_{0.14}O₂, which is a Li₂MnO₃-based solid solution of LiNiO₂ and LiCoO₂, is preferred because it can provide an alkali metal ion secondary battery with a high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, based on the sum of the amounts of the positive electrode active material and lithium phosphate. The upper limit thereof is preferably 10% by mass or less, more preferably 8% by mass or less, still more preferably 5% by mass or less.

To a surface of the positive electrode active material may be attached a substance having a composition different from that of the positive electrode active material. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

One positive electrode active material may be used alone or two or more thereof having different compositions may be used in any combination at any ratio. Preferred examples of the combination in this case include a combination of LiCoO₂ with a ternary system such as LiNi_{0.33}Co_{0.33}Mn_{0.33}O₂, a combination of LiCoO₂ with either LiMn₂O₄ or one obtained by replacing one or more Mn atoms in LiMn₂O₄ with a different transition metal, and a combination of LiFePO₄ with either LiCoO₂ or one obtained by replacing one or more Co atoms in LiCoO₂ with a different transition metal.

In order to achieve a high battery capacity, the amount of the positive electrode active material is preferably 50 to 90% by mass of the positive electrode mixture. The amount of the positive electrode active material in the positive electrode active material layer is preferably 60% by mass or more, more preferably 70% by mass or more, particularly preferably 75% by mass or more. The upper limit of the amount is preferably 88% by mass or less, more preferably 86% by mass or less. Too small an amount of the positive electrode active material in the positive electrode active material layer may lead to an insufficient electric capacity. In contrast, too large an amount thereof may lead to insufficient ion conductivity, insufficient electron conductivity, and insufficient strength of the electrode.

The negative electrode active material is not limited, and may be, for example, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or non-graphitizable carbon; a silicon-containing compound such as silicon or a silicon alloy; and Li₄Ti₅O₁₂, or a mixture of two or more of these. Among these, a material at least partially containing a carbonaceous material and/or a silicon-containing compound can be particularly suitably used.

A negative electrode active material used in the disclosure suitably contains silicon as a constituent element. With a negative electrode active material containing silicon as a constituent element, a high-capacity battery can be produced.

As a material containing silicon, silicon particles, particles having a structure where silicon fine particles are dispersed in a silicon-based compound, silicon oxide particles represented by the formula: SiOₓ (0.5 ≤ x ≤ 1.6), or a mixture of these is/are preferred. The use of any of these can provide a negative electrode mixture for lithium-ion secondary batteries with higher initial charge-discharge efficiency, high capacity, and excellent cycle characteristics.

The term "silicon oxide" herein is a generic term for amorphous silicon oxides. Silicon oxides prior to disproportionation are represented by the formula: SiOₓ (0.5 ≤ x ≤ 1.6) where x preferably satisfies 0.8 ≤ x < 1.6, more preferably 0.8 ≤ x < 1.3. Such a silicon oxide can be obtained, for example, by heating a mixture of silicon dioxide and metallic silicon to generate silicon monoxide gas, followed by cooling and deposition of the silicon monoxide gas.

In order to achieve a high battery capacity, the amount of the negative electrode active material is preferably 50 to 90% by mass of the negative electrode mixture. The amount of the negative electrode active material in the negative electrode active material layer is preferably 60% by mass or more, more preferably 70% by mass or more, particularly preferably 75% by mass or more. The upper limit of the amount is preferably 88% by mass or less, more preferably 86% by mass or less. Too small an amount of the negative electrode active material in the negative electrode active material layer may lead to an insufficient electric capacity. In contrast, too large an amount thereof may lead to insufficient ion conductivity, insufficient electron conductivity, and insufficient strength of the electrode.

### <Mixture sheet for Electrochemical device>

The mixture for an electrochemical device of the disclosure is preferably in the form of a sheet.

The disclosure also relates to a mixture sheet for an electrochemical device containing the mixture for an electrochemical device of the disclosure.

The mixture sheet for an electrochemical device of the disclosure preferably has a thickness of 300 µm or smaller, more preferably 250 µm or smaller, still more preferably 200 µm or smaller, further preferably 180 µm or smaller, particularly preferably 150 µm or smaller, while preferably 10 µm or greater, more preferably 15 µm or greater, still more preferably 20 µm or greater.

The electrochemical device mixture sheet of the disclosure can be used as a solid electrolyte mixture sheet or an electrode mixture sheet.

### <Production method of mixture sheet for electrochemical device>

The mixture sheet for an electrochemical device of the disclosure can be obtained, for example, by a production method including a step (1) of mixing a fluoropolyether, a fibrillatable resin, and a sulfide solid electrolyte to prepare a composition; and a step (2) of rolling the composition obtained in the step (1) into a sheet.

The disclosure also relates to the production method.

The fluoropolyether, the fibrillatable resin, and the sulfide solid electrolyte used in the step (1) are the same as those described for the composition of the disclosure.

For the mixing condition in the step (1), the number of rotations is suitably set to 3000 rpm or less. The number of rotations is preferably 10 rpm or more, more preferably 15 rpm or more, still more preferably 20 rpm or more, while it is preferably 2000 rpm or less, more preferably 1500 rpm or less, still more preferably 1000 rpm or less. At the number of rotations below this range, mixing may take a long time, affecting the productivity. At the number of rotations above this range, fibrillation may occur excessively, resulting in a mixture sheet having poor strength and poor flexibility.

In the step (1), the mixed materials may be molded into a bulky shape. Specific examples of methods of molding into a bulky shape include extrusion molding and press molding. The term "bulky" does not specify the shape and means any state of single mass, including a rod shape, a sheet shape, a spherical shape, a cubic shape, and the like.

A specific example of the rolling method in the step (2) is a method of rolling the bulky mixture using, for example, a roller press, a flat plate press, or a calender roller.

The step (2) may be followed by a step (3) of applying a larger load to the resulting rolled sheet to form a thinner sheet-shaped product. The step (3) may be repeated. As described, better flexibility is achieved not by thinning the rolled sheet in one time but by rolling the sheet in steps. The number of performing the step (3) is preferably twice or more and 10 times or less, more preferably three times or more and nine times or less. A specific example of a rolling method is a method of rotating two or a plurality of rollers and passing the rolled sheet therebetween to provide a thinner sheet-shaped product.

The step (2) or the step (3) is also preferably followed by a step (4) of coarsely crushing the rolled sheet, again forming the coarsely crushed product into a bulky product, and then rolling the bulky product into a sheet-shaped product. Repeating the step (4) is also preferred. The number of performing the step (4) is preferably once or more and 12 times or less, more preferably twice or more and 11 times or less.

Specific examples of coarsely crushing the rolled sheet and again forming the coarsely crushed product into a bulky product in the step (4) include a method of folding the sheet, a method of forming the sheet into a rod- or a thin sheet-shaped product, and a method of forming the sheet into chips. The term "coarsely crushing" herein means changing the form of the rolled sheet obtained in the step (2) or step (3) into a different form so as to roll the product into a sheet-shaped product in the subsequent step, and encompasses simply folding the rolled sheet.

The step (4) may be followed by the step (3), or may be repeated. In any of the steps (2), (3), and (4), uniaxial stretching or biaxial stretching may be performed.

In the step (2), (3), and (4), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. At the number of rotations above this range, fibrillation may occur excessively, resulting in a mixture sheet having poor strength and poor flexibility. The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

### <Electrochemical device>

The disclosure also relates to an electrochemical device produced using the mixture sheet for an electrochemical device of the disclosure.

The electrochemical device of the disclosure may include the mixture sheet for an electrochemical device of the disclosure as a solid electrolyte mixture sheet or as an electrode mixture sheet. Alternatively, the electrochemical device of the disclosure may include the mixture sheets for an electrochemical device of the disclosure as a solid electrolyte mixture sheet and an electrode mixture sheet.

The electrochemical device of the disclosure preferably includes components such as a positive electrode and a negative electrode. Specifically, the electrochemical device of the disclosure is preferably a secondary battery including these components, particularly preferably a lithium-ion secondary battery including these components.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such as carbon cloth and carbon paper. Preferred is any metal material, especially aluminum or an alloy thereof.

In the case of a metal material, the current collector may be in the form of metal foil, a metal cylinder, a metal coil, a metal plate, expanded metal, punched metal, foamed metal, or the like. In the case of a carbon material, it may be in the form of a carbon plate, a carbon film, a carbon cylinder, or the like. Preferred among these is metal foil. The metal foil may be in the form of a mesh, as appropriate. The metal foil may have any thickness, and the thickness is usually 1 µm or greater, preferably 3 µm or greater, more preferably 5 µm or greater, while it is usually 1 mm or smaller, preferably 100 µm or smaller, more preferably 50 µm or smaller. The metal foil having a thickness smaller than this range may have insufficient strength as a current collector. Conversely, the metal foil having a thickness greater than the above range may have poor handleability.

In order to reduce the electric contact resistance between the current collector and the positive electrode active material layer, the current collector also preferably has a conductive aid applied on the surface thereof. Examples of the conductive aid include carbon and noble metals such as gold, platinum, and silver.

The positive electrode may be produced by a usual method. In an exemplary method, the electrode mixture sheet and the current collector are laminated via an adhesive, followed by vacuum drying.

The density of the positive electrode mixture sheet is preferably 2.50 g/cm³ or higher, more preferably 3.00 g/cm³ or higher, still more preferably 3.20 g/cm³ or higher, while it is preferably 3.80 g/cm³ or lower, more preferably 3.75 g/cm³ or lower, still more preferably 3.70 g/cm³ or lower. If the positive electrode mixture sheet has a density higher than the above range, the ratio of the electrolyte to the active material may be lowered, which may hinder ion conduction to the active material. As a result, charge and discharge characteristics at a high current density are possibly degraded, and high output may not be achieved. If the positive electrode mixture sheet has a density lower than the above range, the battery capacity may be reduced due to insufficient active material.

The positive electrode may have any thickness. In order to achieve a high capacity and high output, the lower limit of the thickness of the mixture layer on one side of the current collector excluding the thickness of the metal foil of the current collector is preferably 10 µm or greater, more preferably 20 µm or greater, while preferably 500 µm or smaller, more preferably 450 µm or smaller.

The negative electrode is suitably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

In the case of a metal material, the current collector may be in the form of metal foil, a metal cylinder, a metal coil, a metal plate, expanded metal, punched metal, foamed metal, or the like. In the case of a carbon material, it may be in the form of a carbon plate, a carbon film, a carbon cylinder, or the like. Preferred among these is metal foil. The metal foil may be in the form of a mesh, as appropriate. The metal foil may have any thickness, and the thickness is usually 1 µm or greater, preferably 3 µm or greater, more preferably 5 µm or greater, while it is usually 1 mm or smaller, preferably 100 µm or smaller, more preferably 50 µm or smaller. The metal foil having a thickness smaller than this range may have insufficient strength as a current collector. Conversely, the metal foil having a thickness greater than the above range may have poor handleability.

The negative electrode may be produced by a usual method. In an exemplary method, the electrode mixture sheet and the current collector are laminated via an adhesive, followed by vacuum drying.

The density of the negative electrode mixture is preferably 1.0 g/cm³ or higher, more preferably 1.2 g/cm³ or higher, while it is preferably 2.5 g/cm³ or lower, more preferably 2.2 g/cm³ or lower. If the density is higher than the above range, the ratio of the electrolyte to the active material may be lowered, which may hinder ion conduction to the active material. As a result, charge and discharge characteristics at a high current density are possibly degraded, and high output may not be achieved. If the density is lower than the above range, the battery capacity may be reduced due to insufficient active material.

The negative electrode may have any thickness. In order to achieve a high capacity and high output, the lower limit of the thickness of the mixture layer on one side of the current collector excluding the thickness of the metal foil of the current collector is preferably 10 µm or greater, more preferably 20 µm or greater, while preferably 500 µm or smaller, more preferably 450 µm or smaller.

The secondary battery is preferably a solid-state secondary battery.

The solid-state secondary battery herein is a secondary battery containing a solid electrolyte. It may be a semi-solid-state secondary battery containing, as an electrolyte, a solid electrolyte and a liquid component, or an all-solid-state secondary battery containing a solid electrolyte alone as an electrolyte.

The secondary battery may have any shape, such as a cylindrical shape, a square shape, a laminate shape, a coin shape, or a large-size shape. The shapes and the structures of the positive electrode, the negative electrode, and the mixture sheet may be changed in accordance with the shape of the battery.

The solid-state secondary battery is preferably a lithium-ion battery or is preferably a sulfide-based all-solid-state secondary battery.

The solid-state secondary battery preferably includes a positive electrode, a negative electrode, and a solid electrolyte layer between the positive electrode and the negative electrode.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components such as the positive electrode, the negative electrode, and the solid electrolyte layer. Specifically, the battery may be of cylindrical type, square type, coin type, or laminate type.

The solid-state secondary battery can be produced by, for example, laminating a positive electrode, a solid electrolyte layer sheet, and a negative electrode in this order and pressing them.

It should be appreciated that a variety of modifications and changes in the structure and other details may be made to the aforementioned embodiments without departing from the spirit and scope of the claims.

### EXAMPLES

The disclosure is described with reference to examples, but the disclosure is not intended to be limited by these examples.

### (Production Example)

A PTFE powder was obtained with reference to Production Example 2 in WO 2015/080291 except that the fluorine-containing surfactant was changed to ammonium perfluoroether carboxylate. The resulting PTFE powder had a standard specific gravity of 2.160.

The standard specific gravity (SSG) was determined by the water displacement method in conformity with ASTM D792 using a sample molded in conformity with ASTM D4895.

### (Synthesis Example 1: Synthesis of Compound 1-1)

A reaction vessel purged with nitrogen was charged with 600 mg of sodium hydroxide (available from Fujifilm Wako Pure Chemical Corporation, 15.3 mmol), 30 g of 1,3-bis(trifluoromethyl)benzene (available from Tokyo Chemical Industry Co., Ltd.), and 10 g of dialcohol-terminated fluoropolyether (available from Solvay, Fomblin D2, 5.1 mmol), followed by stirring with heating at 70°C for three hours. The temperature inside the vessel was set to 65°C, and 5.5 g of triethylene glycol-2-bromoethyl methyl ether (available from Tokyo Chemical Industry Co., Ltd., 20.4 mmol) was dropped from a dropping funnel over 10 minutes, followed by stirring with heating for six hours. After returning to room temperature, 5 ml of 1 N hydrochloric acid was added to the reaction solution, followed by stirring for three hours. This solution was washed four times with pure water, and 2 g of magnesium sulfate was added to the separated organic layer, so that the organic layer was dried. Magnesium sulfate was removed from the treated solution by filtration. Volatile components were distilled off from the treated solution, followed by drying for three hours at 100°C, whereby Compound 1-1 (PFPE-PEG) below was obtained. Compound 1-1 was liquid at 25°C.

Compound 1-1: CH₃O(CH₂CH₂O)ₓ₁CH₂CF₂(OCF₂CF₂)_{y}(OCF₂)_{z}OCF₂CH₂O(CH₂CH₂O)ₓ₂CH₃

(x1: 4, y: 12.3 on average, z: 10.2 on average, x2: 4, the number average molecular weight of (CH₂CH₂O)ₓ₁: 176, the number average molecular weight of (CH₂CH₂O)ₓ₂: 176)

### 1. Production of solid electrolyte mixture sheet

A binder (PTFE), a sulfide solid electrolyte (LiI-LiBr-Li₂S-P₂S₅), and optionally a fluoropolyether (PFPE) were placed in a cylindrical container, and mixed and granulated by rotating the container on a rotating stand. By changing the amount of PFPE added, multiple solid electrolyte mixtures (compositions) having different volume fractions of PFPE in the mixtures were obtained. The resulting solid electrolyte mixtures were each molded into a bulky shape and rolled, whereby solid electrolyte sheets with a thickness of about 100 µm were obtained (Examples 1 and 2). The amount of PFPE added in each solid electrolyte mixture is as shown in Table 1 below. PFPE refers to a compound having a chemical structure represented by the following formula (I) (m/n: 1.2, number average molecular weight: 5120, CF₃ and CF₂CF₃ are present in an average ratio of 1:0.17 at the terminal R) and is liquid at 25°C.

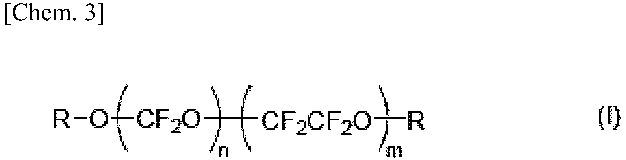

Solid electrolyte mixture sheets were produced as in Examples 1 and 2, except that Compound 1-1 synthesized in Synthesis Example 1 was used instead of PFPE (Examples 3 and 4).

Solid electrolyte mixture sheets were produced as in Examples 3 and 4, except that LiTFSI (Kishida Chemical Co., Ltd.) was added to Compound 1-1 such that the salt concentration was 5% by mass (Examples 5 and 6).

Solid electrolyte mixture sheets were produced as in Examples 1 and 2, except that PFPE was not used (Comparative Examples 1 and 2).

### 2. Production of positive electrode mixture

A binder (PTFE), a conductive aid (VGCF), a sulfide solid electrolyte (LiI-LiBr-Li₂S-P₂S₅), a positive electrode active material (LiNi_{0.80}Co_{0.15}Mn_{0.05}O₂), and optionally a fluoropolyether (PFPE) were placed in a cylindrical container, and mixed and granulated by rotating the container on a rotating stand. By changing the amount of PFPE added, multiple positive electrode mixtures (compositions) having different volume fractions of PFPE in the mixtures were obtained. The resulting positive electrode mixtures were each molded into a bulky shape and rolled, whereby positive electrode mixture sheets with a thickness of about 100 µm were obtained (Examples 7 and 8).

The amount of PFPE added in each positive electrode mixture is as shown in Table 2 below. PFPE was the same as that used in Examples 1 and 2.

Positive electrode mixture sheets were produced as in Examples 7 and 8, except that Compound 1-1 synthesized in Synthesis Example 1 was used instead of PFPE (Examples 9 and 10).

Positive electrode mixture sheets were produced as in Examples 9 and 10, except that LiTFSI (Kishida Chemical Co., Ltd.) was added to Compound 1-1 such that the salt concentration was 5% by mass (Examples 11 and 12).

Positive electrode mixture sheets were produced as in Examples 7 and 8, except that PFPE was not used (Comparative Examples 3 and 4).

### 3. Production of negative electrode mixture

A binder (PVdF), a conductive aid (VGCF), a sulfide solid electrolyte (LiI-LiBr-Li₂S-P₂S₅), and a negative electrode active material (Si) were added to an organic solvent, and were kneaded using an ultrasonic homogenizer to obtain a negative electrode mixture slurry. The obtained negative electrode mixture slurry was dried to obtain a negative electrode mixture.

### 4. Production of solid electrolyte mixture evaluation cell

The solid electrolyte mixture sheet was punched out to a diameter of 11.28 mm to obtain an evaluation sample. The thickness of the obtained evaluation sample was measured using a micrometer. Then, the evaluation sample was sandwiched between carbon-coated thick foils, and current was collected on both sides with SUS electrodes to prepare a solid electrolyte mixture evaluation cell.

### 5. Evaluation of solid electrolyte mixture

Using the solid electrolyte mixture evaluation cell produced as above, the resistance was measured by the AC impedance method. Specifically, the resistance value at the intercept on the real axis at 300 kHz was read from the obtained Nyquist plot. Based on the read value and the thickness of the electrolyte layer, the ion conductivity was calculated.

### 6. Production of battery

The solid electrolyte sheet was placed in a cylinder with a diameter of 11.28 mm and molded with a pressure of 10 kN/m², whereby a solid electrolyte layer was produced. The negative electrode mixture was placed on one side of the produced solid electrolyte layer and molded with a pressure of 10 kN/m². The positive electrode mixture sheet punched out to a diameter of 11.28 mm was placed on the side opposite the side where the negative electrode mixture was placed. An Al foil punched out to a diameter of 11.28 mm was placed on the positive electrode side, and a Cu foil punched out to a diameter of 11.28 mm was placed on the negative electrode side. Then, they were restrained at 5 MPa to obtain an electrode body having a configuration of Al foil/positive electrode mixture layer/solid electrolyte layer/negative electrode mixture layer/Cu foil. Current extraction tabs were attached to the Al foil and Cu foil of the electrode body to produce a battery for evaluation.

### 7. Evaluation of battery resistance

The resistance of the battery for evaluation produced as described above was measured. Specifically, the resistance value at the intercept on the low frequency side of the circular component on the real axis was read from the Nyquist plot obtained by the AC impedance method, and this was determined as the resistance of the battery.

### 8. Evaluation results

The results of Comparative Examples 1 and 2 and Examples 1 to 6 are shown in Table 1 below. The evaluation results of the ion conductivity are shown relative to the ion conductivity of Comparative Example 1, which is set as a baseline (100).

**[Table 1]**

| | | Binder | | Fluoropolyether | | Lithium salt | | Ion conductivity |
|---|---|---|---|---|---|---|---|---|
| | | Type | Amount*1 (% by mass) | Type | Amount*2 (% by mass) | Type | Amount*3 (% by mass) | |
| Comparative Example | 1 | PTFE | 2 | - | - | - | - | 100 |
| | 2 | PTFE | 10 | - | - | - | - | 46 |
| Example | 1 | PTFE | 2 | PFPE | 4 | - | - | 107 |
| | 2 | PTFE | 10 | PFPE | 4 | - | - | 62 |
| | 3 | PTFE | 2 | Compound 1-1 | 4 | - | - | 102 |
| | 4 | PTFE | 10 | Compound 1-1 | 4 | - | - | 49 |
| | 5 | PTFE | 2 | Compound 1-1 | 4 | LiTFSI | 5 | 104 |
| | 6 | PTFE | 10 | Compound 1-1 | 4 | LiTFSI | 5 | 53 |

| | | | | | | | | |
|---|---|---|---|---|---|---|---|---|
| *1: Percentage relative to solid electrolyte *2: Percentage relative to total amount of solid electrolyte and binder *3: Percentage relative to fluoropolyether | | | | | | | | |

The results shown in Table 1 indicate the following.
(1) The ion conductivity was higher in Examples 1, 3, and 5 relative to Comparative Example 1, and higher in Examples 2, 4, and 6 relative to Comparative Example 2. This is considered to be due to the lubricating effect of the fluoropolyether, which improved the filling ability of the solid electrolyte mixture and enhanced its ion conductivity.
(2) The ion conductivity was higher in Example 5 relative to Example 3, and higher in Example 6 relative to Example 4. This is considered to be because Compound 1-1 can dissolve the lithium salt.

The results of Comparative Examples 3 and 4 and Examples 7 to 12 are shown in Table 2 below. The configurations and production conditions of the electrolyte layer and the negative electrode are the same between the examples and comparative examples, and thus, have been omitted from Table 2. The evaluation results of the battery resistance are shown relative to the resistance value of Comparative Example 3, which is set as a baseline (100).

**[Table 2]**

| | | Binder | | Fluoropolyether | | Lithium salt | | Battery resistance |
|---|---|---|---|---|---|---|---|---|
| | | Type | Amount*1 (% by mass) | Type | Amount*2 (% by mass) | Type | Amount*3 (% by mass) | |
| Comparative Example | 3 | PTFE | 2.6 | - | - | - | - | 100 |
| | 4 | PTFE | 5 | - | - | - | - | 155 |
| Example | 7 | PTFE | 2.6 | PFPE | 4 | - | - | 65 |
| | 8 | PTFE | 5 | PFPE | 4 | - | - | 102 |
| | 9 | PTFE | 2.6 | Compound 1-1 | 4 | - | - | 75 |
| | 10 | PTFE | 5 | Compound 1-1 | 4 | - | - | 118 |
| | 11 | PTFE | 2.6 | Compound 1-1 | 4 | LiTFSI | 5 | 70 |
| | 12 | PTFE | 5 | Compound 1-1 | 4 | LiTFSI | 5 | 110 |

| | | | | | | | | |
|---|---|---|---|---|---|---|---|---|
| *1: Percentage relative to total amount of positive electrode active material, solid electrolyte, and conductive aid *2: Percentage relative to total amount of positive electrode active material, solid electrolyte, conductive aid, and binder *3: Percentage relative to fluoropolyether | | | | | | | | |

The results shown in Table 2 indicate the following.
(3) The battery resistance was lower in Examples 7, 9, and 11 relative to Comparative Example 3, and lower in Examples 8, 10, and 12 relative to Comparative Example 4. This is considered that the lubricating effect of the fluoropolyether increased the fluidity of the mixture during molding of the positive electrode, whereby an active material layer having a high filling rate was obtained, resulting in a reduced battery resistance.
(2) The battery resistance was lower in Example 11 relative to Example 9, and lower in Example 12 relative to Example 10. This is because Compound 1-1 can dissolve the lithium salt.

Though a fluoropolyether having a specific chemical structure is exemplified in the examples described above, the chemical structure of the fluoropolyether is not limited thereto. Moreover, though the fluoropolyether is contained in the positive electrode in the examples described above, the same effects can be expected even when the fluoropolyether is contained in the negative electrode or in the electrolyte layer. The mixture formulations for the positive electrode, electrolyte layer, and negative electrode are not limited to the formulations described above.

As described above, a composition having the following formulation can reduce the resistance of an electrochemical device containing a sulfide solid electrolyte.

A composition containing a sulfide solid electrolyte, a fluoropolyether, and a fibrillatable resin.

## Claims

1. A composition comprising:
a sulfide solid electrolyte;
a fluoropolyether; and
a fibrillatable resin.

2. The composition according to claim 1,
wherein the fluoropolyether includes at least one compound represented by any of the following formulas (1) to (4):
(1) R¹-O-Ra¹-Rb¹-O-Ra¹-R¹;
(2) R²-Rb²-O-Ra²-Rb²-R²;
(3) R³-Rb³-O-Ra³-R³;
and
(4) R⁴-Rb⁴-R⁴,
wherein Ra¹ to Ra³ are each independently a group containing at least one of a fluorine-free alkylene unit or a fluorine-free oxyalkylene unit;
each oxyalkylene unit in Ra¹ to Ra³ is independently -CH₂CH₂O- or - CH₂CH(J)O-;
each J is independently an alkyl group or an aryl group;
Rb¹ to Rb⁴ are each independently a fluoropolyether group represented by the following formula (5);
R¹ to R³ are each independently a hydrogen atom, a hydroxy group, a fluorine atom, a C1-C3 alkyl group, an aryl group, a carboxylic acid group, or a C1-C3 fluoroalkyl group; and
each R⁴ is independently a fluorine atom, a hydrogen atom, a hydroxy group, an aldehyde group, a carboxylic acid group, a C1-C10 alkyl ester group, an amide group optionally containing a substituent, or an amino group optionally containing a substituent,
(5) -Rf¹-Rf-O-Rf²-
-wherein Rf¹ and Rf² are each independently a C1-C16 alkylene group optionally substituted with a fluorine atom, and
Rf is a divalent fluoropolyether group.

3. The composition according to claim 2,
wherein the Ra¹ to Ra³ are each independently a polyoxyalkylene group represented by the following formula (Ra-I),
(Ra-I): -(CH₂CH₂O)ᵣ-(CH₂CH(CH₃)O)ₛ-(CH₂CH(CH₂CH₃)O)ₜ-(CH₂CH(Ph)O)ᵤ-
-wherein r, s, t, and u are each independently an integer of 0 or 1 or greater, and r + s + t + u is 4 to 50.

4. The composition according to claim 2 or 3,
wherein the Ra¹ to Ra³ each have a number average molecular weight of 40 to 4000.

5. The composition according to any one of claims 2 to 4,
wherein each Rf is independently a fluoropolyether group represented by the following formula (Rf-I),
Formula (Rf-I): -(OC₆F₁₂)ₐ-(OC₅F₁₀)_{b}-(OC₄F₈)_{c}-(OC₃Rc₆)_{d}-(OC₂F₄)ₑ-(OCF₂)_{f}-
-wherein each Rc is independently a hydrogen atom, a fluorine atom, or a chlorine atom;
a, b, c, d, e, and f are each independently an integer of 0 to 200;
a sum of a, b, c, d, e, and f is 1 or greater;
repeating units with a, b, c, d, e, and f are present in an arbitrary order; and
at least one of a, b, c, e, and f is 1 or greater when all Rcs are hydrogen atoms or chlorine atoms.

6. The composition according to any one of claims 2 to 5,
wherein each Rf is independently a group represented by the following formula (Rf-I-I) or the following formula (Rf-I-II),
Formula (Rf-I-I): -(OC₃F₆)_{d}-(OC₂F₄)ₑ-
-wherein d is an integer of 1 to 200 and e is 0 or 1, and
Formula (Rf-I-II): -(OC₄F₈)_{c}-(OC₃F₆)_{d}-(OC₂F₄)ₑ-(OCF₂)_{f}-
-wherein c and d are each independently an integer of 0 to 30;
e and f are each independently an integer of 1 to 200;
a sum of c, d, e, and f is 2 or greater; and
repeating units with c, d, e, and f are present in an arbitrary order.

7. The composition according to any one of claims 2 to 6,
wherein the R¹ to R³ are each independently a methyl group, an ethyl group, a trifluoromethyl group, or a pentafluoroethyl group.

8. The composition according to any one of claims 1 to 7,
wherein the fibrillatable resin includes polytetrafluoroethylene.

9. The composition according to any one of claims 1 to 8,
wherein the fluoropolyether is liquid at a temperature within a range of 25°C to 80°C.

10. The composition according to any one of claims 1 to 9,
wherein a polyalkylene oxide represented by the following formula (6) amounts to less than 20% by mass:
(6) R^{1B}-(OCHR^{1A}(CH₂)ⱼCHR^{2A})ₙ-OR^{2B}
wherein R^{1A} and R^{2A} are each independently a hydrogen atom or a C1-C5 alkyl group;
j is an integer of 0 or 1 or 2;
R^{1B} and R^{2B} are each independently a hydrogen atom or a C1-C3 alkyl group; and
n is an integer of 5 to 1000.

11. The composition according to any one of claims 1 to 10,
wherein the composition contains a lithium salt in an amount of 0.1 to 30% by mass relative to the fluoropolyether.

12. A mixture for an electrochemical device, comprising the composition according to any one of claims 1 to 11.

13. The mixture for an electrochemical device according to claim 12, further comprising a conductive aid.

14. A mixture sheet for an electrochemical device, comprising the mixture for an electrochemical device according to claim 12 or 13.

15. An electrochemical device comprising the mixture sheet for an electrochemical device according to claim 14.

16. A method for producing a mixture sheet for an electrochemical device, the method comprising:
a step (1) of mixing a fluoropolyether, a fibrillatable resin, and a sulfide solid electrolyte to prepare a composition; and
a step (2) of rolling the composition obtained in the step (1) into a sheet.

17. The production method according to claim 16,
wherein the fluoropolyether includes at least one compound represented by any of the following formulas (1) to (4), and
the fibrillatable resin includes polytetrafluoroethylene,
(1) R¹-O-Ra¹-Rb¹-O-Ra¹-R¹,
(2) R²-Rb²-O-Ra²-Rb²-R²,
(3) R³-Rb³-O-Ra³-R³,
and
(4) R⁴-Rb⁴-R⁴,
wherein Ra¹ to Ra³ are each independently a group containing at least one of a fluorine-free alkylene unit or a fluorine-free oxyalkylene unit;
each oxyalkylene unit in Ra¹ to Ra³ is independently -CH₂CH₂O- or - CH₂CH(J)O-;
each J is independently an alkyl group or an aryl group;
Rb¹ to Rb⁴ are each independently a fluoropolyether group represented by the following formula (5);
R¹ to R³ are each independently a hydrogen atom, a hydroxy group, a fluorine atom, a C1-C3 alkyl group, an aryl group, a carboxylic acid group, or a C1-C3 fluoroalkyl group; and
each R⁴ is independently a fluorine atom, a hydrogen atom, a hydroxy group, an aldehyde group, a carboxylic acid group, a C1-C10 alkyl ester group, an amide group optionally containing a substituent, or an amino group optionally containing a substituent,
(5) -Rf¹-Rf-O-Rf²-
-wherein Rf¹ and Rf² are each independently a C1-C16 alkylene group optionally substituted with a fluorine atom, and
each Rf is independently a group represented by the following formula (Rf-I-I) or the following formula (Rf-I-II),
Formula (Rf-I-I): -(OC₃F₆)_{d}-(OC₂F₄)ₑ-
-wherein d is an integer of 1 to 200 and e is 0 or 1, or
Formula (Rf-I-II): -(OC₄F₈)_{c}-(OC₃F₆)_{d}-(OC₂F₄)ₑ-(OCF₂)_{f}-
-wherein c and d are each independently an integer of 0 to 30;
e and f are each independently an integer of 1 to 200;
a sum of c, d, e, and f is 2 or greater; and
repeating units with c, d, e, and f are present in an arbitrary order.
